# EUROPÄISCHE PATENTSCHRIFT

(11) **EP 0 962 659 B1**
(45) Veröffentlichungstag und Bekanntmachung des Hinweises auf die Patenterteilung: **25.02.2004**
(21) Anmeldenummer: 99108053.2
(22) Anmeldetag: 23.04.1999
(51) Int. Cl.: F04D 29/64, F01D 25/24

(54) **Gehäuseausbildung an einer Gasturbine**
Casing structure of a gas turbine
Construction du boîtier d' une turbine à gaz

(30) Priorität: 30.05.1998 DE 19824421
(43) Veröffentlichungstag der Anmeldung: 08.12.1999
(73) Patentinhaber: Rolls-Royce Deutschland Ltd & Co KG, 15827 Dahlewitz (DE)
(72) Erfinder: Böck, Alexander, 82288 Kottgeisering (DE)
(74) Vertreter: Wablat, Wolfgang, Dr. Dr.

(56) Entgegenhaltungen:
- EP-A- 0 475 771
- DE-A- 4 131 713
- GB-A- 2 260 786
- US-A- 4 976 102

## Beschreibung

Die Erfindung betrifft eine Gehäuseausbildung an einer Gasturbine mit einem Fan, stromab dessen sich ein Vorverdichter befindet, wobei das Vorverdichter-Gehäuse lösbar mit dem Gehäuse des sich - in Strömungsrichtung betrachtet - an den Vorverdichter anschließenden Verdichters verbunden ist. Eine derartige Gehäuseausbildung ist bspw. bei Flug-Gasturbinen, d.h. Zweistrahltriebwerken, allgemein üblicher Stand der Technik, wobei der Vorverdichter auch als Booster bezeichnet wird z.B. GB-A-2 260 786.

Ebenfalls üblich ist es, Sicherungsmaßnahmen vorzusehen, die bei einem - zwar unwahrscheinlichen aber dennoch theoretisch möglichen - Bruch der dem Fan sowie dem Vorverdichter (bzw. Booster) zugeordneten Welle (diese wird im folgenden als Fan-Welle bezeichnet) ein Abwandern des Fans (d.h. der Fanscheibe mit den Schaufeln) nach vorne aus dem Strahltriebwerk heraus verhindern.

Eine erste derartige Sicherungsmaßnahme besteht darin, die Fan-Welle derartig massiv auszuführen, daß nachweislich kein Bruch erfolgen kann.

Gemäß einer anderen Sicherungsmaßnahme ist neben der Fan-Welle eine weitere (redundante) Sicherheits-Welle vorhanden, die im Falle eines Bruchs der erstgenannten alle auftretenden Lasten übernehmen kann.

Schließlich kann als weitere Sicherungsmaßnahme vorgesehen sein, daß irgendwelche Anschlußteile der Fan-Welle, nämlich insbesondere der Vorverdichter-Rotor (bzw. Booster-Rotor) bei einem Wellenbruch auf Anschlag mit feststehenden Gehäuseteilen gehen, so daß hierdurch der Fan inklusive des gebrochenen Wellenstückes am Abwandern aus dem Strahltriebwerk-Gehäuse gehindert wird. Diese feststehenden Gehäuseteile sind dann Bestandteil des Gehäuses des Vorverdichters (d.h. des Booster-Gehäuses), wobei in einem konkreten Ausführungsbeispiel der Booster-Rotor bei einem Bruch der Fan-Welle am inneren Ring der Anfangsleitschaufeln des Boosters (bzw. Vorverdichters) anschlagen und somit von diesem am Abwandern gehindert werden würde.

Damit das Gehäuse des Vorverdichters, an welches sich in Triebwerks-Strömungsrichtung betrachtet das Gehäuse des auf den Vorverdichter folgenden Verdichters anschließt, diese beschriebene Sicherheitsfunktion wahrnehmen kann, muß dieses Vorverdichtergehäuse seinerseits entsprechend massiv ausgebildet sein. Nachdem nämlich das Vorverdichter-Gehäuse mit seinem stromabwärtigen Ende am Verdichter-Gehäuse befestigt ist, während die bei einem Bruch der Fan-Welle auftretenden Kräfte vom stromaufwärtigen Endabschnitt des Vorverdichter-Gehäuses (nämlich möglichst nahe des Fans) aufgenommen werden müssen, muß das Vorverdichter-Gehäuse auf diese (zumindest theoretisch auftretende) zusätzliche Zugbelastung hin ausgelegt werden. Dies führt - auf Grund der erforderlichen massiven Auslegung - nicht nur zu einem hohen Gewicht, sondern macht darüber hinaus die Verwendung von hochfesten Materialien für das Booster-Gehäuse erforderlich, was beides unerwünscht ist.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß der stromaufwärtige Endabschnitt des Vorverdichter-Gehäuses zusätzlich mittels zumindest zweier sich bezüglich der Längsachse der Gasturbine im wesentlichen diametral gegenüberliegender zugankerartigen Zugmittel am Verdichter-Gehäuse angebunden ist. Vorteilhafte Aus- und Weiterbildungen sind Inhalt der Unteransprüche, insbesondere sind dabei die zugankerartigen Zugmittel als Stahlseile ausgebildet.

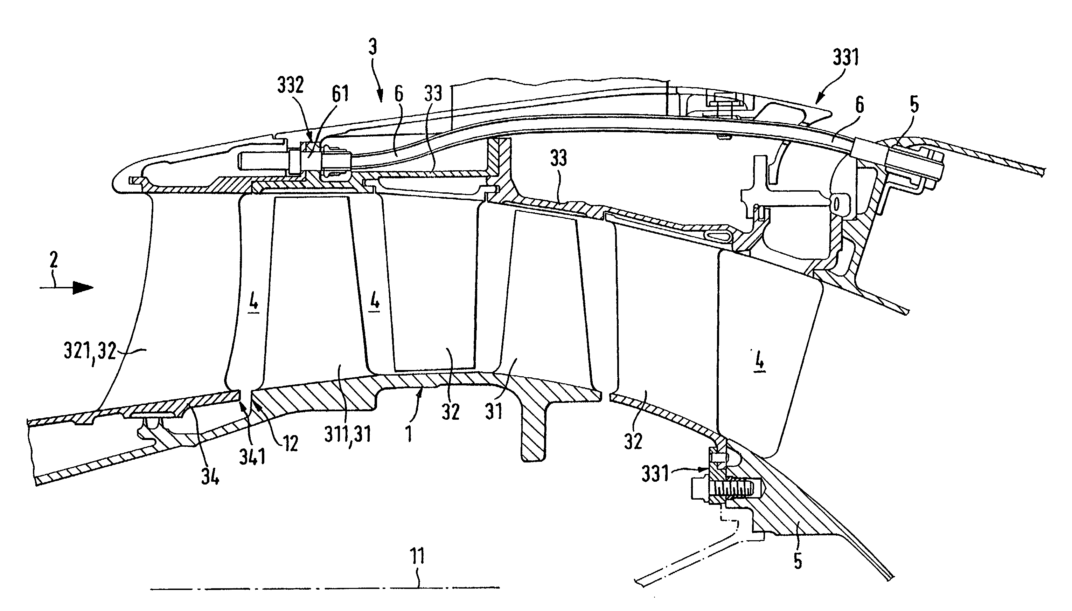

Näher erläutert wird die Erfindung anhand eines bevorzugten Ausführungsbeispieles, wobei in der beigefügten einzigen Figur ein Teilschnitt eines erfindungsgemäßen Gasturbinen-Gehäuses im Bereich des sich an den nicht gezeigten Fan anschließenden Boosters oder Vorverdichters dargestellt ist.

Mit der Bezugsziffer 1 ist die nur teilweise dargestellte Fan-Welle eines Zweistrahl-Gasturbinen-Triebwerkes bezeichnet, deren Achse wie üblich mit der Gasturbinen-Längsachse zusammenfällt. In dieser Figurendarstellung sind diese Achsen nicht sichtbar, da sie sich weit unterhalb des Blattrandes befinden; stellvertretend dargestellt ist daher eine Parallele 11 zur Gasturbinen-Längsachse bzw. zur Achse der Fan-Welle 1.

Die Fan-Welle 1 trägt linksseitig einen nicht gezeigten Fan. Das Strahltriebwerk bzw. der hier dargestellte Einlaufbereich desselben wird somit gemäß Pfeilrichtung 2 von links nach rechts durchströmt. Dabei trägt die Fan-Welle 1 auch die Rotorschaufeln 31 eines in seiner Gesamtheit mit 3 bezeichneten Vorverdichters (bzw. Boosters), der (hier drei) Reihen von Statorschaufeln 32 aufweist, die in einem Vorverdichter-Gehäuse 33 aufgehängt sind. Dieses Vorverdichter-Gehäuse 33 (bzw. Booster-Gehäuse 33) begrenzt wie üblich zusammen mit der Fan-Welle 1 den Strömungskanal 4 für den durch den Verdichter, die Brennkammer sowie die Hochdruck-Turbine des Strahltriebwerkes gemäß Strömungsrichtung 2 geführten Luftstrom.

In der Figurendarstellung nicht gezeigt sind die letztgenannten Bestandteile des Gasturbinen-Strahltriebwerkes, nämlich die übliche Brennkammer sowie die sich daran anschließende Hochdruck-Turbine und die darauf folgende Niederdruck-Turbine. Mit seinem vorderen Endbereich teilweise dargestellt ist jedoch noch das ebenfalls den Strömungskanal 4 im Anschluß an das Booster-Gehäuse 33 begrenzende Verdichter-Gehäuse 5. Dieses Verdichter-Gehäuse 5 (auch "intermediate casing" genannt) umgibt - wie üblich - den sich an den Booster 3 in Strömungsrichtung 2 anschließenden (hier nicht gezeigten) Verdichter der Strahltriebwerk-Gasturbine und schließt sich - in Strömungsrichtung 2 betrachtet - direkt an das Booster-Gehäuse 33 an. Dabei ist der stromabwärtige Endabschnitt 331 des Booster-Gehäuses 33 auf nicht gezeigte Weise lösbar mit dem stromaufwärtigen Ende des Verdichter-Gehäuses 5 verbunden bzw. an diesem befestigt.

Wie ersichtlich und bereits erwähnt trägt das Booster-Gehäuse 33 drei Reihen von in den Strömungskanal 4 hineinragenden Statorschaufeln 32. Die bezüglich Strömungsrichtung 2 ersten bzw. vordersten Statorschaufeln 32 werden als Anfangsleitschaufeln 321 bezeichnet. Der innere, d.h. der Gasturbinen-Längsachse (bzw. der Parallelen 11) zugewandte Ring 34 der Anfangsleitschaufen 321 ist somit ebenfalls Bestandteil des Vorverdichter-Gehäuses 33. Dabei ist die stromabwärtige Endkante des Ringes 34 mit der Bezugsziffer 341 bezeichnet.

Sollte in einem äußerst unwahrscheinlichen Betriebsfall des Gasturbinen-Strahltriebwerkes die Fan-Welle 1 brechen, so muß verhindert werden, daß der Fan nach vorne, d.h. gegen Pfeilrichtung 2 aus dem Triebwerk abwandert. Wenn ein derartiger unwahrscheinlicher Bruch der Fan-Welle 1 eintritt, so befindet sich die Bruchstelle stets relativ weit stromab des Fans und somit auch stromab des Boosters 3. Demzufolge würde bei einem Bruch der (sich wie üblich bis zur bereits genannten Niederdruck-Turbine des Strahltriebwerkes fortsetzenden) Fan-Welle 1 auch der in der Figur gezeigte Teilbereich der Fan-Welle 1 gegen Pfeilrichtung 2 nach vorne abwandern wollen. Dabei würde jedoch der stirnseitig der vordersten Rotorschaufel 311 des Boosters 3 an der Fan-Welle 1 vorgesehene Absatz 12 mit der stromabwärtigen Endkante 341 des Ringes 34 kollidieren. Dies hat zur Folge, daß der Fan und das ihn tragende abgebrochene Teilstück der Fan-Welle 1 inklusive des Booster-Rotors (bestehend aus den auf dem entsprechenden Teilstück der Fan-Welle 1 angeordneten Rotorschaufeln 31) am Abwandern gegen Pfeilrichtung 2 gehindert wird.

Die stromabwärtige Endkante 341 und somit das Booster-Gehäuse 33 hält dann somit im Zusammenwirken mit dem Absatz 12 der Fan-Welle 1 die letztgenannte zurück, was eine effiziente Sicherungsmaßnahme im Falle eines Bruches der Fan-Welle 1 darstellt. In einer allgemeineren Ausführungsform der Erfindung können im übrigen (alternativ) irgendwelche Anschlußteile der Fan-Welle 1 bei einem Wellenbruch auf Anschlag mit feststehenden Gehäuseteilen der Strahltriebwerk-Gasturbine gehen. Beim hier gezeigten Ausführungsbeispiel sind diese feststehenden Gehäuseteile Bestandteil des Gehäuses 33 des Vorverdichters 3.

Damit das Gehäuse 33 des Vorverdichters 3 diese beschriebene Sicherheitsfunktion wahrnehmen kann, muß es entsprechend massiv ausgebildet sein. Nachdem nämlich das Vorverdichter-Gehäuse 33 mit seinem stromabwärtigen Endabschnitt 331 am Verdichter-Gehäuse 5 befestigt ist, während die bei einem Bruch der Fan-Welle 1 auftretenden Kräfte wie ersichtlich vom stromaufwärtigen Endabschnitt 332 des Booster-Gehäuses 33 aufgenommen werden müssen, müßte das Booster-Gehäuse 33 auf diese (zumindest theoretisch auftretende) zusätzliche Zugbelastung hin ausgelegt werden. Dies würde - auf Grund der erforderlichen massiven Auslegung - nicht nur zu einem hohen Gewicht führen, sondern darüber hinaus die Verwendung von hochfesten Materialien für das Booster-Gehäuse 33 erforderlich machen, was beides unerwünscht ist.

Als Abhilfemaßnahme für diese geschilderte Problematik ist erfindungsgemäß vorgesehen, daß der stromaufwärtige Endabschnitt 332 des Vorverdichter-Gehäuses 33 zusätzlich mittels zumindest zweier sich bezüglich der Längsachse der Gasturbine (bzw. der Parallelen 11 hierzu) im wesentlichen diametral gegenüberliegender zugankerartiger Zugmittel 6 am Verdichter-Gehäuse 5 angebunden ist. Über diese Zugmittel 6 können dann die im Falle eines Bruches der Fan-Welle 1 über die stromabwärtige Endkante 341 in das Booster-Gehäuse 33 eingeleiteten Kräfte direkt in das "intermediate casing" bzw. Verdichter-Gehäuse 5 und somit in die Gesamtstruktur des Strahltriebwerkes eingeleitet werden, ohne daß das Booster-Gehäuse 33 selbst hierbei mit besonders hohen Zugkräften - diese sind gegen Pfeilrichtung 2 gerichtet - beaufschlagt wird. Die Abstützkraft, mit welcher sich der Fan sowie das diesen tragende abgebrochene Teilstück der Fan-Welle 1 an der Endkante 341 abstützt, wird somit über die zugankerartigen Zugmittel 6 im wesentlichen unter Umgehung des Ringmantels des Booster-Gehäuses 33 in das Verdichter-Gehäuse 5 eingeleitet. Demzufolge muß das Booster-Gehäuse 33 nicht auf eine derartige Zusatzbeanspruchung hin ausgelegt werden und kann daher auch in einem nichthochfesten Leichtbauwerkstoff, wie bspw. Aluminium ausgeführt sein.

In der gezeigten bevorzugten Ausführungsform der Erfindung sind die zugankerartigen Zugmittel 6 als Stahlseile ausgebildet, die mit ihren beiden Enden einerseits am stromaufwärtigen Endabschnitt 332 des Vorverdichter-Gehäuses 33 und andererseits am Verdichter-Gehäuse 5 befestigt sind, und zwar bevorzugt ebenfalls im stromaufwärtigen Endbereich desselben. Diese Befestigung kann dabei auf jede gängige Weise erfolgen, wesentlich ist in diesem Zusammenhang lediglich, daß die gewünschte Kraftübertragung ermöglicht wird, d.h. daß die Stahlseile (diese werden im folgenden ebenfalls mit der Bezugsziffer 6 bezeichnet) als Zuganker wirken können. In anderen Worten bedeutet dies, daß das Booster-Gehäuse 33 durch die im stromaufwärtigen Endabschnitt 332 desselben angreifenden zugankerartigen Zugmittel 6 bzw. Stahlseile 6 mit seinem stromabwärtigen Endabschnitt 331 (bzw. dem geeignet gestalteten Endflansch desselben) gegen das Verdichtergehäuse 5 (bzw. gegen den geeignet gestalteten Anfangsflansch desselben) gepreßt wird.

Im Sinne einer vorteilhaften Weiterbildung der Erfindung ist vorgesehen, daß die Stahlseile 6 (bzw. allgemein die Zugmittel 6) an zumindest einem der beiden Gehäuse 5, 33 mittels eines spannmutterartigen Endstückes 61 befestigt sind. Dann ist es auf einfache Weise möglich, bei der Montage der Strahltriebwerk-Gasturbine die beiden Gehäuse, nämlich das Vorverdichter-Gehäuse 33 sowie das Verdichter-Gehäuse 5, in gewünschter Weise durch geeignetes Einstellen der nicht näher bezeichneten Spannmutter des Endstückes 61 gegeneinander zu verspannen. Da derartige Spannmutter-Konstruktionen dem Fachmann bekannt sind, wird auf den detaillierten Aufbau des spannmutterartigen Endstückes 61 an dieser Stelle nicht näher eingegangen.

Vielmehr sei im folgenden darauf hingewiesen, daß anstelle von zwei zugankerartigen Zugmitteln 6 selbstverständlich auch mehrere derartige Zugmittel 6 vorgesehen sein können. Um dabei jegliches geringfügiges Verkanten der beiden Gehäuse 5, 33 gegeneinander zu vermeiden, sollten sich diese Zugmittel 6 bezüglich der Gasturbinen-Längsachse (bzw. bezüglich der Parallelen 11 hierzu) im wesentlichen diametral gegenüberliegen. Wesentlich ist somit die über dem Umfang des Booster-Gehäuses 33 im wesentlichen gleich verteilte Anordnung der Zugmittel 6. Werden insgesamt drei derartige Zugmittel 6 oder Stahlseile 6 vorgesehen, so sollten diese - über dem Umfang bzw. der Querschnittsfläche des Booster-Gehäuses 33 betrachtet - jeweils in Sektoren von 120° aufeinanderfolgend angeordnet werden. Auch eine derartige Gestaltung soll ausdrücklich unter den Begriff "zumindest zweier einander im wesentlichen diametral gegenüberliegender Zugmittel" fallen. Es hat sich jedoch gezeigt, daß eine paarweise Anordnung von Zugmitteln 6, die sich jeweils möglichst exakt einander diametral gegenüber liegen, die besten Ergebnisse lieferte, wobei in einem bevorzugten Ausführungsbeispiel drei Paare von Zugmitteln 6 und somit insgesamt sechs Stahlseile 6 gleichmäßig über dem Umfang des Vorverdichter-Gehäuses 33 verteilt angebracht waren.

Abschließend sei noch darauf hingewiesen, daß eine vergleichbare erfindungsgemäße Gestaltung auch bei anderen Gasturbinen-Anlagen, bei denen sich die gleiche Problematik stellt, Anwendung finden kann, wobei selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

### Bezugszeichenliste:

- 1: Fan-Welle
- 11: Parallele zur Achse von 1
- 12: Absatz an 11

- 2: Strömungsrichtung

- 3: Vorverdichter = Booster

- 31: Rotorschaufel von 3
- 311: vorderste Rotorschaufel

- 32: Statorschaufel von 3
- 321: Anfangsleitschaufel

- 33: Vorverdichter-Gehäuse = Booster-Gehäuse
- 331: stromabwärtiger Endabschnitt von 33
- 332: stromaufwärtiger Endabschnitt von 33

- 34: innerer Ring (von 321)
- 341: stromabwärtige End kante von 34

- 4: Strömungskanal

- 5: Verdichter-Gehäuse = "intermediate casing"

- 6: zugankerartiges Zugmittel
- 61: spannmutterartiges Endstück zur Befestigung von 6 an 5 oder 33

## Patentansprüche

1. Gehäuseausbildung an einer Gasturbine mit einem Fan, stromab dessen sich ein Vorverdichter (3) befindet, wobei das Vorverdichter-Gehäuse (33) lösbar mit dem Gehäuse (5) des sich - in Strömungsrichtung (2) betrachtet - an den Vorverdichter (3) anschließenden Verdichters verbunden ist,
**dadurch gekennzeichnet, daß** der stromaufwärtige Endabschnitt (332) des Vorverdichter-Gehäuses (33) zusätzlich mittels zumindest zweier sich bezüglich der Längsachse der Gasturbine im wesentlichen diametral gegenüberliegender zugankerartiger Zugmittel (6) am Verdichter-Gehäuse (5) angebunden ist.

2. Gehäuseausbildung nach Anspruch 1,
**dadurch gekennzeichnet, daß** die zugankerartigen Zugmittel (6) als Stahlseile ausgebildet sind, die zumindest an einem der beiden Gehäuse (33, 5) mittels eines spannmutterartiges Endstückes (61) befestigt sind.

3. Gehäuseausbildung nach Anspruch 1 oder 2,
**dadurch gekennzeichnet, daß** das Vorverdichter-Gehäuse (33) in einem nichthochfesten Werkstoff ausgeführt und mittels mehrerer Paare von zugankerartigen Zugmitteln (6) am Gehäuse (5) des Verdichters angebunden ist.

## Claims

1. Casing structure of a gas turbine with a fan, with a supercharger (booster) (3) being located downstream of the fan, with the supercharger (booster) casing (33) being separately connected to the casing (5) of the compressor and with the compressor being located downstream of the supercharger (booster) (3),
**characterized in that** the upstream end section (332) of the supercharger (booster) casing (33) is additionally fastened to the compressor (intermediate) casing (5) by means of at least two tierod-type tensioners (6) positioned essentially diametrically opposite to each other relative to the longitudinal axis of the gas turbine.

2. Casing structure in accordance with Claim 1,
**characterized in that** the tierod-type tensioners (6) are steel ropes which are attached to at least one of the two casings (33, 5) by means of adjustment-nut terminals (61).

3. Casing structure in accordance with Claim 1 or 2,
**characterized in that** the supercharger (booster) casing (33) is made of a non-high strength material and is fastened to the casing (5) of the compressor by means of several pairs of tierod-type tensioners (6).

## Revendications

1. Structure de carter d'une turbine à gaz avec une soufflante, en aval de laquelle se trouve un suralimenteur (3), le carter du suralimenteur (33) étant relié de manière détachable au carter (5) du compresseur situé en aval du suralimenteur (3) vu dans le sens d'écoulement (2),
**caractérisée en ce que** l'extrémité amont (332) du carter du suralimenteur (33) et de plus reliée au carter du compresseur (5) au moyen d'au moins deux éléments de traction de type tirant d'ancrage (6) disposés pour l'essentiel de manière diamétralement opposée par rapport à l'axe longitudinal de la turbine à gaz.

2. Structure de carter selon la revendication 1,
**caractérisée en ce que** les éléments de traction de type tirant d'ancrage (6) sont formés par des câbles en acier fixés à au moins l'un des deux carters (33, 5) au moyen d'un embout (61) de type écrou tendeur.

3. Structure de carter selon la revendication 1 ou 2,
**caractérisée en ce que** le carter du suralimenteur (33) est réalisé dans un matériau non hautement résistant et est relié au carter (5) du compresseur par plusieurs paires d'éléments de traction (6) de type tirant d'ancrage.
